Europäisches Patentamt

European Patent Office

Office européen des brevets

(19)

(11) Veröffentlichungsnummer: **0 093 885**
A2

(12) # EUROPÄISCHE PATENTANMELDUNG

(21) Anmeldenummer: 83103554.8

(22) Anmeldetag: 13.04.83

(51) Int. Cl.³: **F 17 C 11/00, C 01 B 3/00**

(30) Priorität: 06.05.82 DE 3216917

(43) Veröffentlichungstag der Anmeldung: 16.11.83
**Patentblatt 83/46**

(84) Benannte Vertragsstaaten: **AT BE CH DE FR GB IT LI LU NL SE**

(71) Anmelder: **Thyssen Industrie AG, Am Thyssenhaus 1, D-4300 Essen (DE)**

(72) Erfinder: **Häusler, Peter, Über der Horst 17, D-4320 Hattingen (DE)**
Erfinder: **Nathrath, Norbert, Töpferstrasse 12, D-4250 Bottrop (DE)**

(74) Vertreter: **Eberhard, Friedrich, Dr. et al, Am Thyssenhaus 1, D-4300 Essen (DE)**

(54) **Wasserstoff-Hydridspeicher.**

(57) Die Erfindung betrifft einen Wasserstoff-Hydridspeicher mit einem vorzugsweise rohrförmigen festen Gehäuse (1) für das Speichermaterial. Im Gehäuseinneren hat der Speichermaterialkörper eine begrenzende Wandung aus einem gegen Wasserstoff beständigen Gewebe, insbesondere einem Metallgewebe, durch die der Wasserstoff in das Material ein- und ausströmt. Vorzugsweise ist in das Speichermaterial eine Leitung (6) (rohrartiger Hohlkörper) aus einem Metallgewebe eingebettet, das hochelastisch und gut gasdurchlässig ausgebildet ist.

Essen, den 23.3.1983
PZ 3296     EB/gl

Thyssen Industrie AG
Am Thyssenhaus 1
4300 Essen 1

## Wasserstoff-Hydridspeicher

Die Erfindung bezieht sich auf einen Wasserstoff-Hydridspeicher mit einem das Speichermaterial enthaltenden festen Gehäuse, das insbesondere rohrartig langgestreckt ausgebildet ist, das an einer Stirnseite verschlossen ist und das an der anderen Stirnseite einen äußeren Gehäuseanschluß sowie im Strömungsweg des Wasserstoffs ein Filter aufweist.

Je nach Bedarf an Speichervolumen kann auch eine Vielzahl solcher Speicher als größere Einheit zusammengefaßt werden. Wasserstoff kann als Energieträger außer in gasförmiger oder flüssiger Form auch als Metallhydrid transportiert und gelagert werden. In Form von Metallhydrid kann Wasserstoff unter normalen Umweltbedingungen problemlos, sicher und in kompakter Form insbesondere auch gespeichert werden. Zur Aufnahme des pulvrigen oder als Preßlinge (Tabletten) vorliegenden Speichermaterials, z.B. eine Metallegierung mit Titan, Zirkon, Chrom und Mangan, dienen im allgemeinen rohrartig langgestreckte Gehäuse mit einem stirnseitigen Anschlußstück. Die meisten Metalle verbinden sich mit Wasserstoff zu Metallhydriden, wobei bei der Anlagerung von Wasserstoff an das Metall in der Regel Wärme frei wird, während bei der Freisetzung von Wasserstoff Wärme hinzugefügt werden muß. Die freiwerdende bzw. zuzuführende Reaktionswärme muß je nach Richtung der Reaktion möglichst schnell abgeführt bzw. in das Speichermaterial eingebracht werden. Hinzu kommt, daß beim Laden des Speichers, d.h. bei der Adsorption von Wasserstoff

- 2 -

sich das Speichermaterial ausdehnt. Um innerhalb des Speichermaterials möglichst geringe Druck- und/oder Temperaturgradienten zu erhalten, ist anzustreben, daß beim Laden oder Entladen des Speichers alle Bereiche (Teilvolumina) des Speichermaterials im wesentlichen gleichermaßen an der betreffenden Reaktion teilnehmen.

Das wird bei Gehäusen mit an nur einer Seitenfläche, insbesondere an einer Stirnfläche eines rohrartig langgestreckten Gehäuses erfolgender Zu- und Abströmung des Wasserstoffs bisher nur unvollkommen erreicht (DE-OS 30 22 859).

Aufgabe der Erfindung ist es, günstigere Bedingungen beim Laden und Entladen des Speichers zu schaffen, insbesondere kürzere (mittlere) Strömungswege im mit Speichermaterial gefüllten Gefäßvolumen zu erzielen zusammen mit verbesserter Temperatur- und Druckverteilung.

Diese Aufgabe wird dadurch gelöst, daß die begrenzende Wandung zwischen dem Speichermaterialkörper und dem freien Strömungsweg des Wasserstoffs im Innenraum des festen Gehäuses aus einem gegen Wasserstoff beständigen Gewebe besteht.

Diese Ausbildung ermöglicht ein nachgiebiges Volumen des Speichermaterialkörpers bei vorteilhaft schneller Wasserstoffaufnahme und Abgabe mit einer zusätzlichen Filterwirkung.

Bei solchen Geweben kommen z.B. Kunststoffgewebe in Frage. Dann ist es zweckmäßig, das Speichermaterial vor dem Einbringen in den Hydridspeicher für die Aufnahme des Wasserstoffs zu aktivieren.

Eine vorteilhafte Ausführung besteht darin, daß das Gewebe ein Metallgewebe ist. Metallgewebe sind temperaturbeständig und ermöglichen die Aktivierung des Speichermaterials im Hydridspeicher unter Anwendung von höheren Temperaturen.

Das Gewebe kann nach Anspruch 3 als eine das Speichermaterial umgebende Hülse, zweckmäßig mit einer stirnseitigen Prallplatte, ausgebildet sein.

Meist wird jedoch ein Hydridspeicher mit mindestens einer vom Gehäuseanschluß ausgehenden, in das Speichermaterial eingebetteten Leitung bevorzugt, bei dem nach Anspruch 4 die Leitung als ein rohrartiger Hohlkörper aus dem Gewebe ausgebildet ist.

Beim Einsatz von Hydridspeicherelementen größerer Abmessungen ist es zur Verbesserung der Lade- und Entlademöglichkeit vorteilhaft, das Gewebe sowohl als das Speichermaterial umgebende Hülse als auch als in das Speichermaterial eingebettete Leitung auszubilden.

Bei dem Hydridspeicher nach Anspruch 4 erfolgen Verteilung und Transport des Wasserstoffes über den rohrartigen Hohlkörper aus einem Gewebe, das hochelastisch und gut gasdurchlässig ist. Bei den üblichen rohrförmig langgestreckten Gehäusen geschieht daher die Zu- und Abführung des Wasserstoffs im Speichermaterial selbst praktisch nur noch in radialer Richtung. Bei Ausdehnung des Speichermaterials während des Ladens gibt der rohrartige Hohlkörper nach, so daß sich das Speichermaterial ausdehnen kann. Das führt im Ergebnis auch zu einer geringeren Belastung der Gehäusewandungen, so daß bei gleicher Sicherheit andere Abmessungen als bisher verwendet werden können und der Speicher insgesamt auch leichter gebaut werden kann.

Zweckmäßig wird das Metallgewebe aus rostfreiem Stahldraht aufgebaut, und zwar vorzugsweise aus einem Stahldraht von bis zu 0,04 mm Durchmesser. Daraus lassen sich Metallgewebe herstellen, die eine Maschenweite in der Größenordnung bis zu 0,04 mm, vorzugsweise von 0,01 bis 0,02 mm aufweisen. Bei einer so geringen Maschenweite kann das Metallgewebe zumindest zusätzlich auch die Funktion eines Filters übernehmen, weil der Transport feiner Metallteilchen durch die Gewebewand hindurch zumindest erschwert wird.
Als besonders vorteilhaft hat sich erwiesen, wenn das Metallgewebe aus einem Tressengewebe besteht. Tressengewebe haben relativ wenige dicke Drähte in Kettrichtung und viele dünne Drähte in Schußrichtung. Sie ergeben einen das Speichermaterial umgebende Hülse bzw. rohrartigen Hohlkörper mit hinsichtlich Längssteifigkeit, radialer Elastizität, lichter Maschenweite und Maschenform optimalen Eigenschaften.

Damit der rohrartige Hohlkörper vor und nach dem Einsetzen in das Speichermaterial genügend formstabil bleibt, geht man zweckmäßig von einem ebenen Gewebestück aus, das rundgebogen und axial zusammengeschweißt ist. Um das Manipulieren mit dem rohrartigen Hohlkörper und dessen Anschluß zu vereinfachen, kann der rohrartige Hohlkörper anschlußseitig in eine Buchse eingesetzt sein, mit der er zweckmäßig verschweißt ist.

Aus Sicherheitsgründen kann bei dem erfindungsgemäßen Hydridspeicher zusätzlich ein Filter eingesetzt werden, der nach bevorzugter Ausführung eine Scheibe ist, die zusammen mit der Buchse in den Gehäuseanschluß eingesetzt ist.

Im folgenden werden anhand der Zeichnung zwei Ausführungsbeispiele der Erfindung erläutert:

Figur 1   zeigt einen Längsschnitt durch einen Hydrid-Speicher mit einer zentralen Leitung,

Figur 2   eine andere Ausführungsform im Längsschnitt,

Figur 3   eine weitere Ausführungsform.

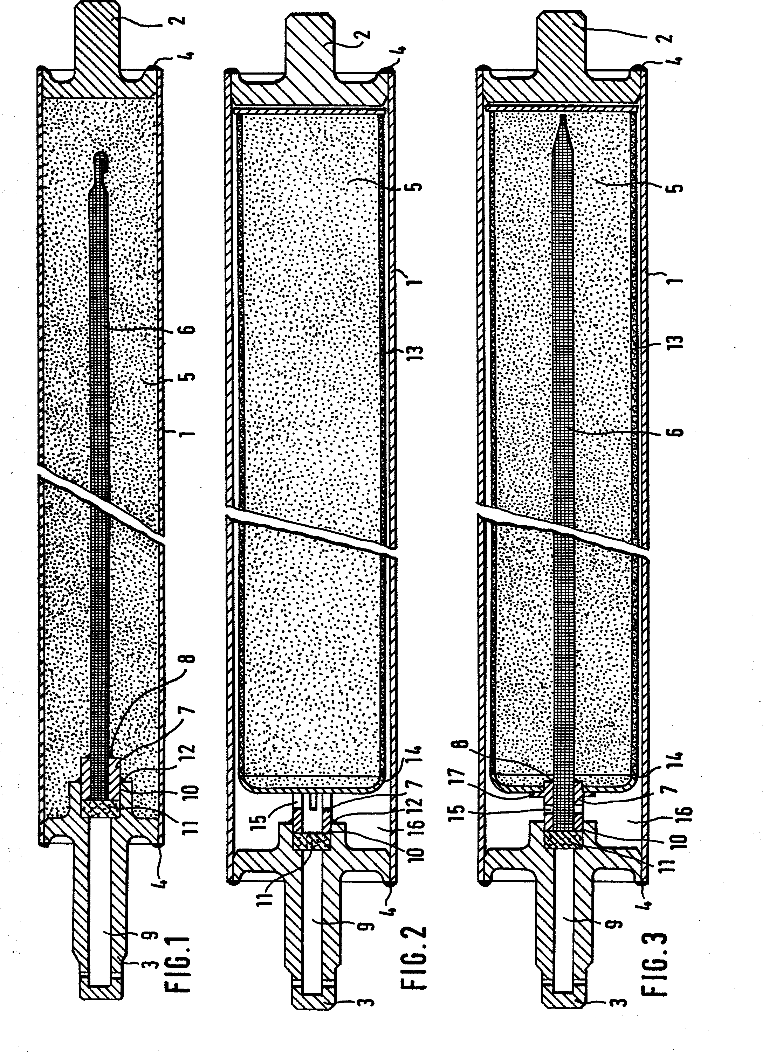

Der in Figur 1 dargestellte Hydrid-Speicher besitzt ein Gehäuse aus einem Rohrmantel 1, dessen offene Enden einerseits mit einem eingesetzten Verschlußstück 2 und andererseits einem Anschlußstück 3 verschlossen sind.

Verschlußstück 2 und Anschlußstück 3 sind mit den stirnseitigen Rändern des Rohrmantels 1 durch Schweißnähte 4 verbunden. Der Innenraum 5 des Gehäuses ist mit dem pulvrigen Speichermetall gefüllt. In das Speichermetall ist in mittiger Anordnung eine Leitung 6 eingebettet, die ein rohrartiger Hohlkörper aus einem Metall-Tressengewebe ist. Das Metallgewebe besteht aus rostfreiem Stahldraht mit höchstens 0,04 mm Durchmesser und besitzt eine Maschenweite von etwa 0,01 mm. Die Leitung 6 ist anschlußseitig in eine Buchse 7 aus wasserstoffbeständigem Stahl eingesetzt und mit dieser durch eine ringförmige Schweißnaht 8 an der einen Stirnseite der Buchse 7 verbunden.

Das Anschlußstück 3 weist eine Stufenbohrung 9 auf, deren Abschnitt 10 mit größerem Durchmesser in den Innenraum 5 des Gehäuses gerichtet ist. In diesem größeren Abschnitt 10 ist die Buchse 7 mit der Leitung 6 unter Zwischenschaltung einer Filterscheibe 11 eingesetzt. Die Buchse 7 ist mit dem innenseitigen Rand des Anschlußstückes 3 durch eine ringförmige Schweißnaht 12 verbunden.

Die Filterscheibe 11 besteht aus einem Sinterkörper aus einem wasserstoffbeständigen Chrom-Nickel-Stahl. Die Filterscheibe 11 kann aber auch aus einem wasserstoffbeständigen Kunststoffmaterial bestehen. Die Filterfeinheit beträgt 0,01 bis 0,02 mm.

Bei dem Hydridspeicher nach Figur 2 ist das Speichermaterial im Innenraum 5 des festen Gehäuses (Rohrmantel 1) von einer Hülse 13 aus Metallgewebe aus Stahldraht mit etwa 0,02 mm Maschenweite umgeben. An der Stirnseite der Hülse 13 ist eine Prallplatte 14 angebracht. Die Buchse 7 am Anschlußstück 3 hat drei Schlitze 15, die den Vorraum 16 mit der Bohrung 9 verbinden. Die übrigen Bezugszeichen bezeichnen mit Figur 1 übereinstimmende Teile. Die Hülse 13 mit Speichermaterial ist in den Rohrmantel 1 mit nur geringem Spiel eingesetzt, ohne daß dadurch der freie Strömungsweg des Wasserstoffs beeinträchtigt wird.

Bei der Ausführungsform nach Figur 3 ist zur Verbesserung der Lade- und Entladefunktion das Metallgewebe sowohl als den Speichermaterialkörper 5 umgebende Hülse 13 als auch in das Speichermaterial eingebettete Leitung 6 ausgebildet. Die Leitung 6 ist durch eine ringförmige Schweißnaht 8 mit der Buchse 7 verbunden; die Prallplatte 14 ist durch einen Flansch 17 an der Buchse 7 gehalten. Der zugeleitete Wasserstoffstrom verteilt sich hinter der Filterscheibe 11; ein Teil strömt in die Leitung 6 aus Metallgewebe, ein Teil tritt durch die Schlitze 15 in den Vorraum 16 aus und von da in den Zwischenraum zwischen dem festen Rohrmantel 1 und der Hülse 13. Beim Entladen ist der Strömungsverlauf umgekehrt.

Ansprüche:

1. Wasserstoff-Hydridspeicher mit einem das Speichermaterial enthaltenden festen Gehäuse, das insbesondere rohrartig langgestreckt ausgebildet ist, an einer Stirnseite verschlossen ist und an der anderen Stirnseite einen äußeren Gehäuseanschluß und im Strömungsweg des Wasserstoffs ein Filter aufweist, dadurch gekennzeichnet, daß die begrenzende Wandung (6;13) zwischen dem Speichermaterialkörper und dem freien Strömungsweg des Wasserstoffs im Innenraum (5) des festen Gehäuses (1) aus einem gegen Wasserstoff beständigen Gewebe besteht.

2. Hydridspeicher nach Anspruch 1, dadurch gekennzeichnet, daß das Gewebe ein Metallgewebe ist.

3. Hydridspeicher nach Anspruch 1 oder 2, dadurch gekennzeichnet, daß das Speichermaterial von einer Hülse (13) aus dem Gewebe umgeben ist.

4. Hydridspeicher nach einem der obigen Ansprüche, bei dem vom Gehäuseanschluß ausgehend, wenigstens eine gasdurchlässige Leitung in das Speichermaterial eingebettet ist, dadurch gekennzeichnet, daß die Leitung (6) ein rohrartiger Hohlkörper aus dem Gewebe ist.

5. Hydridspeicher nach einem der Ansprüche 2 bis 4, dadurch gekennzeichnet, daß das Metallgewebe aus rostfreiem Stahldraht aufgebaut ist.

6. Hydridspeicher nach einem der Ansprüche 2 bis 5, dadurch gekennzeichnet, daß das Metallgewebe eine Maschenweite bis zu 0,04 mm aufweist.

7. Hydridspeicher nach Anspruch 6, dadurch gekennzeichnet, daß die Maschenweite 0,01 bis 0,02 mm beträgt.

8. Hydridspeicher nach einem oder mehreren der Ansprüche 5 bis 7, dadurch gekennzeichnet, daß das Metallgewebe aus Stahldraht von bis zu 0,04 mm Durchmesser aufgebaut ist.

9. Hydridspeicher nach einem oder mehreren der Ansprüche 2 bis 8, dadurch gekennzeichnet, daß das Metallgewebe ein Tressengewebe ist.

10. Hydridspeicher nach einem oder mehreren der Ansprüche 4 bis 9, dadurch gekennzeichnet, daß der rohrartige Hohlkörper (6) aus einem ebenen Gewebestück rundgebogen und axial verschweißt ist.

11. Hydridspeicher nach einem oder mehreren der Ansprüche 4 bis 10, dadurch gekennzeichnet, daß der rohrartige Hohlkörper (6) anschlußseitig in eine Buchse (7) eingesetzt ist.

12. Hydridspeicher nach einem oder mehreren der Ansprüche 4 bis 11, dadurch gekennzeichnet, daß der rohrartige Hohlkörper (6) mit der Buchse (7) verschweißt ist.

13. Hydridspeicher nach einem oder mehreren der Ansprüche 4 bis 11, dadurch gekennzeichnet, daß die Buchse (7) zusammen mit einem Scheibenfilter (11) in den Gehäuseanschluß (3) eingesetzt ist.

Essen, den 23.3.1983

0093885

PZ 3296  EB/gl

## BEZUGSZEICHENLISTE

| | | |
|---|---|---|
| 1 | = | fester Rohrmantel (Gehäuse) |
| 2 | = | Verschlußstück |
| 3 | = | Anschlußstück |
| 4 | = | Schweißnähte an 1/2, 1/3 |
| 5 | = | Innenraum von 1; Speichermaterialkörper |
| 6 | = | Leitung (rohrartiger Hohlkörper) aus Metallgewebe |
| 7 | = | Buchse |
| 8 | = | ringförmige Schweißnaht an 7/6 |
| 9 | = | Stufenbohrung |
| 10 | = | größerer Abschnitt von 9 |
| 11 | = | Filterscheibe |
| 12 | = | ringförmige Schweißnaht an 3/7 |
| 13 | = | Hülse aus Metallgewebe |
| 14 | = | Prallplatte |
| 15 | = | Schlitze |
| 16 | = | Vorraum |
| 17 | = | Flansch |

FIG.1

FIG.2

FIG.3

1/1

0093885